# EUROPEAN PATENT APPLICATION

(11) **EP 1 890 374 A2**
(43) Date of publication of application: **20.02.2008**
(21) Application number: 07113410.0
(22) Date of filing: 30.07.2007
(51) Int. Cl.: H02K 11/00

(54) **Method and apparatus for monitoring machinery vibration**

(30) Priority: 14.08.2006 US 503258
(71) Applicant: General Electric Company, Schenectady, NY 12345 (US)
(72) Inventor: Salem, Sameh, Rexford, NY 12148 (US); Salon, Sheppard, Schenectady, NY 12308 (US)
(74) Representative: Bedford, Grant Richard

(57) **Abstract**

An apparatus and method for monitoring vibration of the stator core and/or the conductors of electrical machinery during its operation involves positioning vibration sensors at the stator bar ends and operatively coupling the vibration sensors to a central controller. The vibration sensors are axially disposed along the length of an optical fiber and form an interferometer with a reference reflector. The central controller receives a reflected signal from each sensor which represents a measure of the vibration occurring in the stator core and/or the conductors at the location of the sensor.

## Description

This invention is directed to a method and apparatus for continuous on-line monitoring of internal electrical machinery vibration and, in particular, can be used to monitor stator core and conductor vibration during normal operation of electrical machinery.

Over time, the normal operation of heavy electrical machinery - such as, for example, electrical generators, turbines or the like - can lead to damage of the stator core resulting in down time for repairs. More particularly, as normal operational vibrations occur during continued and prolonged operation of the machinery the stator bar can be damaged by, for example, loosening of the stator coil windings and insulation, fracturing or cracks occurring in the laminates, wedge shrinkage, and/or the ripple spring losing elasticity thereby causing the stator bars to move. Up until now, there has not been a way to reliably monitor stator core vibration while the machine is on line.

To guard against prolonged and extensive vibration damage occurring to the stator bar, generators are periodically scheduled for maintenance and inspection of the stator bar which involves taking the machines off-line and disassembling the machines for inspection and, if necessary, repair. Thus, the generators are periodically taken off-line without any evidence of damage or need for repair, resulting in unnecessary expense and operating inefficiencies for those instances when the inspections determine that there has not been any degradation of, or damage to, the stator bars.

Various aspects of the present invention provide a system and method for continuously monitoring vibration data over the length of the stator bar while the machine is in operation. Sensors are placed in close proximity to each stator bar winding and the sensors are operatively coupled to a central controller that reads strain measurement data from each sensor and which correlates the strain measurement data from each sensor to the actual positions along the particular stator bar windings from which the data was obtained.

In an exemplary embodiment, the system comprises optical fibers wherein each optical fiber has spaced apart Bragg grating sensors disposed along its length. An optical fiber is installed along each wedge of the stator bar windings with the sensors being immune to the hostile environment of the stator core with its attendant large electric and magnetic fields.

Alternative embodiments can employ sensors that measure other parameters such as, for example, temperature, displacement or acceleration. For example, piezoelectric sensors can be used to measure displacement caused by operating vibrations.

In the exemplary embodiment, for each stator bar winding, an optical fiber sensor is disposed between a ripple spring and the inner most edge of the inner stator bar. The ripple spring is kept in place by wedges and is provided to maintain a tight fit between the wedges and the stator bar winding. Each optical fiber sensor comprises an interferometer and is operatively coupled to the central controller. The optical fiber sensors and controller operate such that a reflected signal from each sensor location along the optical fiber is modulated by a unique frequency so that band pass filtering allows the retrieval of each sensor's signal.

The system monitors wedge tightness through direct measurement of strain on the ripple spring as determined by the optical fiber sensors and the reflected signals. More particularly, the optical fiber sensors provide data signals which can be correlated to the locations where the ripple spring has undergone a change in motion or displacement, i.e., strain. The locations at which the ripple spring has undergone changes indicate where loosening of the stator core windings and/or the other above described attendant problems can potentially occur.

Various aspects and embodiments of the present invention will now be described in connection with the accompanying drawings, in which:
FIGURE 1 shows the location of vibration sensors in an exemplary embodiment;
FIGURE 2 shows an exploded view of the vibration sensors shown in FIGURE 1;
FIGURES 3A-3B show more detail of the optical fiber that carries the vibration sensors; and
FIGURE 4 shows in schematic block form an optical fiber with vibration sensors operatively coupled to a controller.

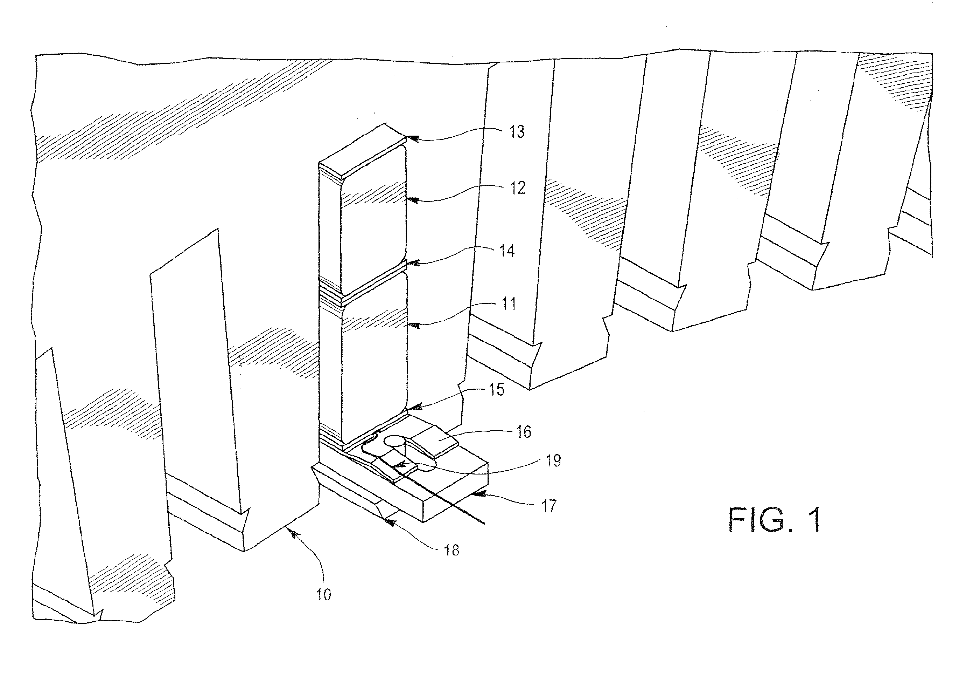

FIGURE 1 shows the major components of a stator core winding to include stator core 10, inner stator bar 11, outer stator bar 12, slot liner 13 disposed between core 10 and outer stator bar 12, slot filler 14 disposed between outer stator bar 12 and inner stator bar 11, grooved slot filler 15 disposed between inner stator bar 11 and ripple spring 16, slide wedge 17 and end wedge 18. Also shown in FIGURE 1 is optical fiber sensor 19 disposed between ripple spring 16 and grooved slot filler 15.

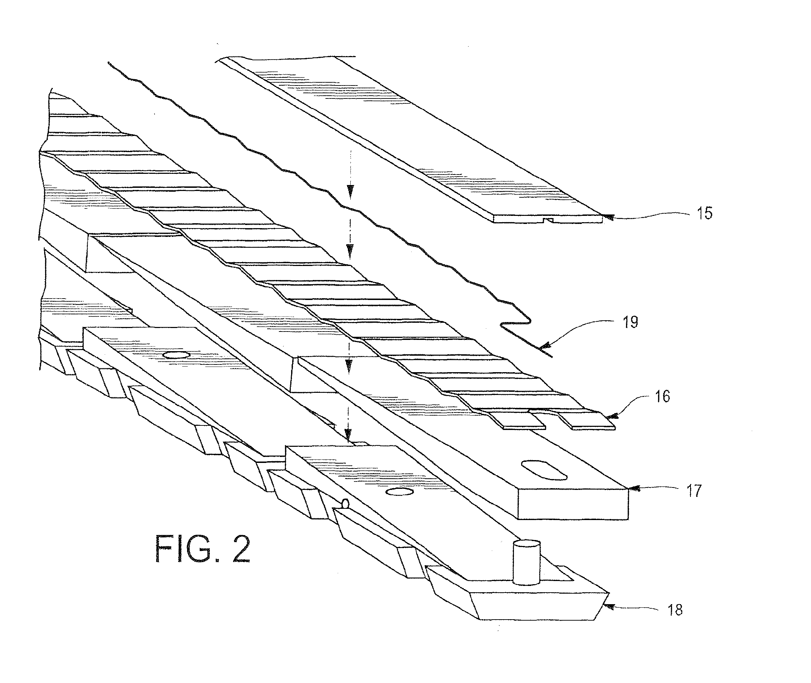

FIGURE 2 is an exploded view of the arrangement of grooved slot filler 15, optical fiber sensor 19, ripple spring 16, slide wedge 17 and end wedge 18.

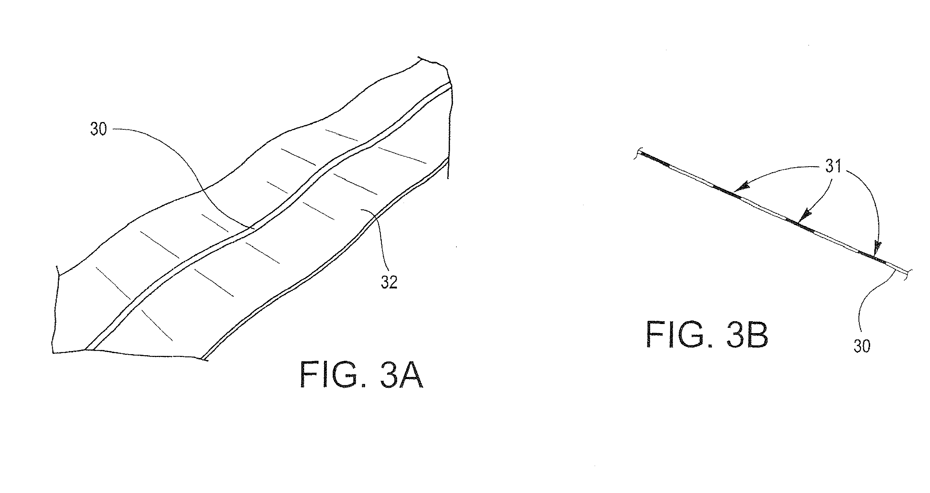

Optical fiber sensor 19 is schematically shown in FIGURES 3A-3B to comprise a one fiber optic cable 30 with Bragg gratings sensors 32 distributed axially along the cable.
FIGURE 3B shows cable 30 bonded to a coupon or ribbon 32 and FIGURE 3B shows the relative size of cable 30 and Bragg grating sensors 31.

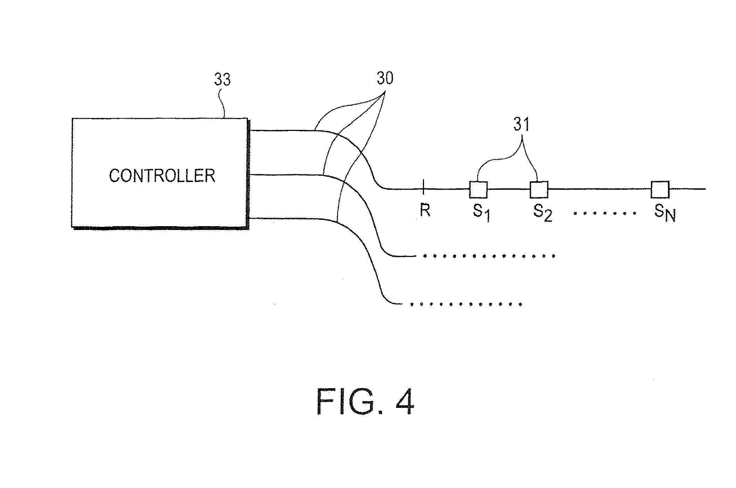

As schematically depicted in FIGURE 4, one or more cables 30 are operatively coupled to controller 33 which includes a tunable laser (not shown). Optical fiber sensor 19 and controller 33 can be obtained, for example, from Luna Innovations which provides a central controller under its marketing name "Distributed Sensing System." In operation, central controller 33 transmits a signal along cable 30 and each Bragg grating sensor 31, located at axially displaced locations S1, S2 ... SN, forms an interferometer with the reference reflector R. The reflected signal from each Bragg grating sensor 31 is modulated by a unique frequency so that band pass filtering in central controller 33 allows for the retrieval of each sensor's signal.

The reflected signals from each Bragg grating sensor 31 are indicative of the amount of strain on ripple spring 16 and by monitoring these signals over time a measure of the ripple spring's diminished elasticity can be obtained. More particularly, each of the reflected signals can be correlated to diminished elasticity of the ripple spring at the location of the Bragg grating sensor from which the reflected signal was received. The change in motion or displacement of ripple spring 16 is indicative of loosening of the stator coil windings and insulation, fracturing or cracks occurring in the laminates, and/or wedge shrinkage all of which can cause the stator bars to move.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are defined in the following numbered clauses:
1. A system for monitoring stator core or conductor vibration during operation of electrical machinery, said system comprising:
   a plurality of sensors (31) disposed along at least one stator bar (11-12) of the stator core (10), said plurality of sensors (31) monitoring vibration of the at least one stator bar (11) during operation of the electrical machinery; and
   a controller (33) operatively coupled to said plurality of sensors (31) for receiving uniquely identified signals from each one of said plurality of sensors (31), and for converting said uniquely identified signals into stator core or conductor vibration data correlated to the location of each of said plurality of sensors (31).
2. A system as in clause 1, wherein the plurality of sensors (31) are disposed along the length of at least one optical fiber (30).
3. A system as in clause 2, wherein the at least one optical fiber (30) is disposed between a ripple spring (16) and a bottom edge of the at least one stator bar (11) of the stator core (10).
4. A system as in clause 3, wherein the plurality of sensors (31) disposed along the length of the at least one optical fiber (30) measure strain on the ripple spring (16).
5. A system as in any preceding clause, wherein the controller (33) transmits signals to said plurality of sensors (31) and the uniquely identified signals from each one of said plurality of sensors (31) are reflected back to said controller (33).
6. A system as in any preceding clause, wherein the controller (33) transmits signals to said plurality of sensors (31) and the uniquely identified signals from each one of said plurality of sensors (31) are reflected back to said controller.
7. A system as in any preceding clause, wherein the controller (33) transmits signals to said plurality of sensors (31) and the uniquely identified signals from each one of said plurality of sensors (31) are reflected back to said controller.
8. A system as in any preceding clause, wherein the controller (33) transmits signals to said plurality of sensors (31) and the uniquely identified signals from each one of said plurality of sensors (31) are reflected back to said controller.
9. A method of monitoring stator core or conductor vibration during operation of electrical machinery, said method comprising:
   locating a plurality of sensors (31) along at least one stator bar (10), (11) of the stator core (10), said plurality of sensors (31) monitoring vibration of the at least one stator bar (11) or associated conductors during operation of the electrical machinery; and
   receiving uniquely identified signals from each one of said plurality of sensors (31) at a central controller (33), and
   converting said uniquely identified signals into stator core or conductor vibration data at said central controller (33) which correlates said stator core or conductor vibration data to the location of each of said plurality of sensors (31).
10. A method as in clause 9, wherein the plurality of sensors (31) are disposed along the length of at least one optical fiber (30).
11. A method as in clause 9 or clause 10, wherein the at least one optical fiber (30) is disposed between a ripple spring (16) and a bottom edge of the at least one stator bar (11) of the stator core (10).
12. A method as in clause 11, wherein the plurality of sensors (31) disposed along the length of the at least one optical fiber (30) sense strain on the ripple spring (16).
13. A method as in any one of clauses 9 to 11, further including transmitting signals to said plurality of sensors (31) so that the uniquely identified signals from each one of said plurality of sensors are reflected back to said controller (33).
14. A method as in any one of clauses 10 to 13, further including transmitting signals to said plurality of sensors (31) so that the uniquely identified signals from each one of said plurality of sensors are reflected back to said controller (33).
15. A method as in any one of clauses 10 to 14, further including transmitting signals to said plurality of sensors (31) so that the uniquely identified signals from each one of said plurality of sensors are reflected back to said controller (33).
16. A method as in any one of clauses 10 to 15, further including transmitting signals to said plurality of sensors (31) so that the uniquely identified signals from each one of said plurality of sensors are reflected back to said controller (33).

## Claims

1. A system for monitoring stator core or conductor vibration during operation of electrical machinery, said system comprising:
a plurality of sensors (31) disposed along at least one stator bar (11-12) of the stator core (10), said plurality of sensors (31) monitoring vibration of the at least one stator bar (11) during operation of the electrical machinery; and
a controller (33) operatively coupled to said plurality of sensors (31) for receiving uniquely identified signals from each one of said plurality of sensors (31), and for converting said uniquely identified signals into stator core or conductor vibration data correlated to the location of each of said plurality of sensors (31).

2. A system as in claim 1, wherein the plurality of sensors (31) are disposed along the length of at least one optical fiber (30).

3. A system as in claim 2, wherein the at least one optical fiber (30) is disposed between a ripple spring (16) and a bottom edge of the at least one stator bar (11) of the stator core (10).

4. A system as in claim 3, wherein the plurality of sensors (31) disposed along the length of the at least one optical fiber (30) measure strain on the ripple spring (16).

5. A system as in any preceding claim, the controller (33) transmits signals to said plurality of sensors (31) and the uniquely identified signals from each one of said plurality of sensors (31) are reflected back to said controller (33).

6. A method of monitoring stator core or conductor vibration during operation of electrical machinery, said method comprising:
locating a plurality of sensors (31) along at least one stator bar (10), (11) of the stator core (10), said plurality of sensors (31) monitoring vibration of the at least one stator bar (11) or associated conductors during operation of the electrical machinery; and
receiving uniquely identified signals from each one of said plurality of sensors (31) at a central controller (33), and
converting said uniquely identified signals into stator core or conductor vibration data at said central controller (33) which correlates said stator core or conductor vibration data to the location of each of said plurality of sensors (31).

7. A method as in claim 6, wherein the plurality of sensors (31) are disposed along the length of at least one optical fiber (30).

8. A method as in claim 7, wherein the at least one optical fiber (30) is disposed between a ripple spring (16) and a bottom edge of the at least one stator bar (11) of the stator core (10).

9. A method as in claim 8, wherein the plurality of sensors (31) disposed along the length of the at least one optical fiber (30) sense strain on the ripple spring (16).

10. A method as in any one of claims 6 to 8, further including transmitting signals to said plurality of sensors (31) so that the uniquely identified signals from each one of said plurality of sensors are reflected back to said controller (33).
